(19) Europäisches Patentamt
European Patent Office
Office européen des brevets

(11) EP 0 698 586 B1

(12) **EUROPÄISCHE PATENTSCHRIFT**

(45) Veröffentlichungstag und Bekanntmachung des Hinweises auf die Patenterteilung:
**21.01.1998 Patentblatt 1998/04**

(51) Int. Cl.$^6$: **C04B 28/02**
// (C04B28/02, 24:26, 24:32)

(21) Anmeldenummer: **95111498.2**

(22) Anmeldetag: **21.07.1995**

(54) **Mit Polymerisaten modifizierte mineralische Baustoffe, die zusätzliche Polyetherderivate enthalten**

Inorganic building materials containing modifying polymer and additional polyether derivatives

Matériaux de construction inorganiques contenant des modifiants polymères et dérivés de polyéthers additionels

(84) Benannte Vertragsstaaten:
**BE DE DK ES FR GB IT LU NL SE**

(30) Priorität: **29.07.1994 DE 4426873**

(43) Veröffentlichungstag der Anmeldung:
**28.02.1996 Patentblatt 1996/09**

(73) Patentinhaber:
**BASF AKTIENGESELLSCHAFT**
**67056 Ludwigshafen (DE)**

(72) Erfinder:
- **Pakusch, Joachim, Dr.**
  **D-67065 Ludwigshafen (DE)**
- **Angel, Maximilian, Dr.**
  **D-67105 Schifferstadt (DE)**
- **Dragon, Andree**
  **D-67346 Speyer (DE)**
- **Beckerle, Wilhelm Friedrich**
  **D-67240 Bobenheim-Roxheim (DE)**
- **Teichmann, Helmut**
  **D-67098 Bad Dürkheim (DE)**

(56) Entgegenhaltungen:
**EP-A- 0 242 646**
**EP-A- 0 573 036**
**US-A- 4 125 504**

EP 0 698 586 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.15.8/3.4

## Beschreibung

Vorliegende Erfindung betrifft mit Polymerisaten modifizierte mineralische Baustoffe, die wenigstens eine Verbindung der allgemeinen Formel I

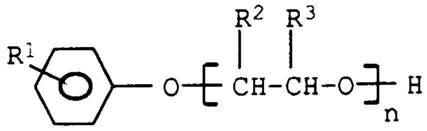

(I),

in der die Variablen nachfolgende Bedeutung aufweisen:

$R^1$: $C_1$- bis $C_5$-Alkyl, vorzugsweise Methyl,
$R^2$, $R^3$: Wasserstoff oder Methyl, mit der Maßgabe, daß $R^2$ von $R^3$ verschieden sein muß und
n: eine Zahl im Bereich 2 bis 9, vorzugsweise 4 bis 7 und besonders bevorzugt 6,

zugesetzt enthalten.

Mineralische Bindemittel sind allgemein bekannt. Es handelt sich um pulverförmige anorganische Stoffe wie Kalk, Gips und/oder insbesondere Zement, die durch Anrühren mit Wasser in ihre gebrauchsfertige Form überführt werden, wobei letztere beim sich selbst überlassen, an der Luft oder auch unter Wasser, als Funktion der Zeit steinartig verfestigen. Üblicherweise werden sie zur Herstellung von mineralischen Baustoffen wie Mörteln oder Betonen eingesetzt, indem man beim Anmachen mit Wasser feinteilige oder gröbere Zuschläge wie Sand oder Steine zusetzt.

Es ist ferner allgemein bekannt, daß mineralische Baustoffe zur gezielten Steuerung ihres Eigenschaftsprofils häufig in mit Polymerisaten (der Begriff Polymerisat soll hier solche hochmolekularen Verbindungen umfassen, die durch radikalische Polymerisation von wenigstens eine ethylenisch ungesättigte Gruppierung aufweisenden Ausgangsmonomeren erhältlich sind) modifizierter Form eingesetzt werden. Als modifizierende Polymerisate kommen dabei Polymerisate unterschiedlichsten Monomerenaufbaus in Betracht, deren Glasübergangstemperatur Tg in einem weiten Bereich, z.B. von -60 bis +180°C, variieren kann. Beispiele für die Modifikation von mineralischen Baustoffen mit Polymerisaten umfassen z.B. die US-A 4 340 510, die GB-PS 1 505 558, die US-A 3 196 122, die US-A 3 043 790, die US-A 3 239 479, die DE-A 43 17 035, die DE-A 43 17 036, die DE-A 43 20 220, die EP-A 537 411, die DE-AS 16 69 903, die BE-A 84 54 499, die JP-A 54/43285, die US-A 4 225 496, die DE-A 32 20 384, die DE-A 28 37 898, die US-A 3 232 899 und die JP-A 91/131533.

Es ist außerdem allgemein bekannt, daß bei der Errichtung von Neubauten zunehmend (insbesondere in Europa) Schaumstoffe auf der Basis von Polystyrol (z.B. Styropor® oder Styrodur®) eingearbeitet werden.

Beispielsweise bilden Fliesenelemente aus Styrodur ein hervorragendes Trägermaterial zum Verlegen von keramischen Wandfliesen im Dünnbettverfahren. Ferner eignen sich Bauelemente aus Styrodur zur Unterbrechung von Wärmebrücken, wie sie z.B. dort auftreten, wo Beton und Mauerwerk aufeinander stoßen. Auch ist es bekannt, Platten aus Styropor zum Zweck der Wärmedämmung auf Häuserfassaden anzubringen. Eine gängige Methode besteht dabei darin, daß die Rückseite der Styropor-Dämmstoffplatten mittels mit Polymerisaten modifiziertem zementösem Mörtel auf der Fassade (z.B. aus Mauerwerk, Beton, mineralischem Putz etc.) befestigt wird. Auf die Vorderseite der Styropor-Dämmstoffplatten wird in der Regel der gleiche Mörtel als sogenannter Armierungsspachtel aufgebracht. Dieser dient normalerweise zur Einbettung von Gewebearmierungen (z.B. aus Glasfasern, Polyester, Polypropylen u.a.), die in der Regel zur Stoßfugenüberbrückung zwischen den einzelnen Styroporplatten eingesetzt werden. Abschließend wird über das Gittergewebe üblicherweise zur vollständigen Einbettung des Gewebes nochmals Armierungsspachtel aufgebracht, die Oberfläche egalisiert und nach Durchhärtung eine Abschlußbeschichtung, z.B. ein mineralischer oder Kunstharzputz, aufgetragen.

Ganz allgemein tritt gemäß Vorgenanntem zunehmend das Problem auf, eine permanent haftende Verbindung zwischen Schaumstoffen auf der Basis von Polystyrol und mineralischen Baustoffen, die mit Polymerisaten modifiziert sind, zu erzeugen. Insbesondere soll diese Haftung auch unter der Einwirkung von Feuchtigkeit befriedigen.

Nachteilig an den bekannten mit Polymerisat modifizierten mineralischen Baustoffen ist, daß ihre Haftung auf Schaumstoffen auf der Basis von Polystyrol nach ihrer Verfestigung nicht zu befriedigen vermag.

Die Aufgabe der vorliegenden Erfindung bestand daher darin, mit Polymerisat modifizierte mineralische Baustoffe zur Verfügung zu stellen, die nach ihrer Verfestigung insbesondere eine erhöhte Naßhaftung auf Schaumstoffen auf der Basis von Polystyrol aufweisen.

Demgemäß wurden die eingangs definierten mineralischen Baustoffe gefunden. Die Verbindungen der allgemeinen Formel I sind allgemein bekannt. Beispielsweise werden Verbindungen der allgemeinen Formel I in der Technischen Information der BASF AG TI/ED 1118d, Juli 1991 (Acronal® 290 D) und in der Technischen Information der BASF AG TI/ED 1036d, November 1990 (Acronal® S 702) empfohlen, um die Verfilmung wäßriger Polymerisatdispersionen günstig zu beeinflussen.

Besonders bevorzugt wird als erfindungsgemäße Verbindung I eine solche angewendet, in der $R^1$ ein Methylrest und n die Zahl 6 ist. Mit Vorteil befindet sich dabei der Methylrest $R^1$ in ortho- und/oder para-Stellung zur Ethergruppierung. Bezogen auf das im mineralischen Baustoff enthaltene modifizierende Polymerisat beträgt die erfindungsgemäße Zusatzmenge an Verbindungen der allgemeinen Formel I üblicherweiese 0,1 bis 20, vorzugsweise 0,1 bis 10 Gew.-%.

Die die Haftung auf Polystyrolschaumstoffen verbessernde Wirkung tritt insbesondere dann ein, wenn als das den mineralischen Baustoff modifizierende Polymerisat ein solches verwendet wird, das in polymerisierter Form

| | |
|---|---|
| zu 90 bis 100 Gew.-% | aus wenigstens einem Monomeren aus der Gruppe umfassend Styrol, α-Methylstyrol, Vinyltoluole sowie Ester aus 3 bis 6 Kohlenstoffatome aufweisenden α,β-monoethylenisch ungesättigten Carbonsäuren und 1 bis 12 Kohlenstoffatome aufweisenden Alkanolen (Monomere a) und |
| zu 0 bis 10 Gew.-% | aus sonstigen wenigstens eine ethylenisch ungesättigte Gruppe aufweisenden Monomeren (Monomere b) |

aufgebaut ist.

Bevorzugte Monomere a sind n-Butylacrylat und Styrol. Als Monomere b kommen unter anderen Nitrile von 3 bis 6 C-Atome aufweisenden α,β-monoethylenisch ungesättigten Carbonsäuren, deren Amide, die am N substituiert sein können, sowie die ungesättigten Carbonsäuren selbst, aber auch Monomere wie Acrylamidopropansulfonsäure, Vinylpyrrolidon, Hydroxyethylacrylat oder quaternäres Vinylimidazol in Betracht. Vorzugsweise enthält das modifizierende Polymerisat höchstens 5 Gew.-% an Monomeren b einpolymerisiert.

Mit besonderem Vorteil ist das den mineralischen Baustoff modifizierende Polymerisat ein solches, das in polymerisierter Form zu

| | |
|---|---|
| 30 bis 70 Gew.-% | aus wenigstens einem Ester aus 3 bis 6 C-Atome aufweisenden α,β-monoethylenisch ungesättigten Carbonsäuren und 1 bis 12 Kohlenstoffatome aufweisenden Alkanolen (Monomere a'), |
| 30 bis 70 Gew.-% | aus wenigstens einem Monomeren aus der Gruppe umfassend Styrol, α-Methylstyrol und Vinyltoluole (Monomere b') und |
| 0 bis 5 Gew.-% | aus einem oder mehreren Monomeren aus der Gruppe umfassend 3 bis 6 C-Atome aufweisende α,β-monoethylenisch ungesättigte Carbonsäuren und deren Amide (Monomere c') |

aufgebaut ist. Bevorzugtes Monomeres a' ist n-Butylacrylat und bevorzugtes Monomeres b' ist Styrol.

Mit Vorteil wählt man die Gewichtsanteile der verschiedenen in das den mineralischen Baustoff modifizierende Polymerisat in polymerisierter Form eingebauten Monomeren, bezogen auf die Gesamtmenge an einpolymerisierten Monomeren, so, daß gemäß der Gleichung von Fox eine Glasübergangstemperatur von -15 bis +60°C, besonders bevorzugt von 0 bis 40°C resultiert.

Nach Fox (T.G. Fox, Bull. Am. Phys. Soc. (Ser. II) 1, 123 [1956]) gilt für die Glasübergangstemperatur von Mischpolymerisaten in guter Näherung:

$$\frac{1}{Tg} = \frac{X^1}{Tg^1} + \frac{X^2}{Tg^2} + \ldots\ldots \frac{X^n}{Tg^n},$$

wobei $X^1$, $X^2$, ....., $X^n$ die Massenbrüche der Monomren 1, 2, ....., n und $Tg^1$, $Tg^2$, ....., $Tg^n$ die Glasübergangstemperaturen der jeweils nur aus einem der Monomeren 1, 2, ....., n aufgebauten Polymeren in Grad Kelvin bedeuten. Die Glasübergangstemperaturen dieser Homopolymerisate der vorgenannten Monomere sind bekannt und z.B. in J. Brandrup, E.H. Immergut, Polymer Handbook 1st Ed., J. Wiley, New York 1966, 2nd Ed., J. Wiley, New York 1975, und 3rd Ed., J. Wiley, New York, 1989, aufgeführt.

Selbstverständlich kommen als den mineralischen Baustoff modifizierende Polymerisate auch solche in Betracht, die hauptsächlich Ester aus Vinylalkohol und bis zu 6 C-Atome aufweisenden Carbonsäuren, z.B. Vinylacetat oder Vinylpropionat, einpolymerisiert enthalten. Als Comonomeres kommt dabei vor allem Ethylen in Betracht.

Üblicherweise erfolgt das Einbringen der den mineralischen Baustoff modifizierenden Polymerisate in Gestalt ihrer wäßrigen Polymerisatdispersionen, weshalb die modifizierenden Polymerisate bevorzugt nach der Methode der radikalischen wäßrigen Emulsionspolymerisation hergestellt werden.

Die Vorzüge dieser Vorgehensweise liegen u.a. darin begründet, daß die wäßrige Polymerisatdispersion einerseits die Polymerisate in besonders feinteiliger, bindende Wirkung implizierender Form enthält, und andererseits als Dispergiermedium das zum Anmachen sowieso benötigte Wasser aufweist. Bevorzugt beträgt der gewichtsmittlere Durch-

messer $\overline{d}_w$ der dispergierten Polymerisatpartikel dabei > 100 nm, und ganz besonders bevorzugt > 300 nm. Üblicherweise beträgt $\overline{d}_w \leq 2.000$ nm. Es ist ferner günstig, wenn die Durchmesser der dispergierten Polymerisatpartikel über einen breiten Durchmesserbereich verteilt sind.

Ein geeignetes Maß zur Charakterisierung der Breite der Durchmesserverteilung ist der Quotient $Q=d_{90}-d_{10}/d_{50}$, wobei $d_m$ der Durchmesser ist, der von m Gew.-% der dispergierten Polymerisatpartikel nicht überschritten wird. Vorzugsweise beträgt Q 0,5 bis 1,5.

Wie eine derartige Teilchenverteilungsbreite aufweisende wäßrige Polymerisatdispersionen erhältich sind, ist dem Fachmann bekannt (z.B. aus DE-A 43 07 683).

Die radikalische wäßrige Emulsionspolymerisation kann sowohl unter Mitverwendung von Dispergiermitteln wie z.B. Schutzkolloiden und/oder Emulgatoren, als auch in Abwesenheit derselben erfolgen. Mit Vorteil wird im Rahmen der radikalischen wäßrigen Emulsionspolymerisation dabei die Semi-Batch-Fahrweise angewendet. D.h., der überwiegende Teil der Monomeren wird dem Polymerisationsgefäß nach Maßgabe des erfolgten Polymerisationsumsatzes kontinuierlich zugeführt (Zulaufverfahren). Werden Emulgatoren mitverwendet, üblicherweise bis zu 3 Gew.-%, bezogen auf die zu polymerisierenden Monomeren, erfolgt die Zufuhr der zu polymerisierenden Monomeren in der Regel vereint in in wäßrigem Medium voremulgierter Weise.

Mit Vorteil arbeitet man die erfindungsgemäße Verbindung I unmittelbar in die wäßrige Polymerisatdispersion ein, die das zur Baustoffmodifizierung zu verwendende Polymerisat enthält. Die erfindungsgemäße Verbindung I kann dabei sowohl vor, während, als auch nach Beendigung der radikalischen wäßrigen Emulsionspolymerisation zugesetzt werden. Mit Vorteil wird die erfindungsgemäße Verbindung I entweder nach beendeter radikalischer wäßriger Emulsionspolymerisation oder gemeinsam mit den zuzuführenden Monomeren im Rahmen des Zulaufverfahrens zugegeben.

Eine im Vergleich zur wäßrigen Polymerisatdispersion noch günstigere Applikationsform des den mineralischen Baustoff modifizierenden Polymerisats ist diejenige des in wäßrigem Medium redispergierbaren Polymerisatpulvers, da sich aus selbigem mit den übrigen Mörtel-, Beton- oder Putzbestandteilen verkaufsgerechte lagerfähige Trockenzubereitungen anfertigen lassen, die zur Überführung in die gebrauchsfertige Form lediglich noch mit Wasser angerührt werden müssen.

Eine besonders zweckmäßige Methode zur Überführung einer wäßrigen Polymerisatdispersion in ein redispergierbares Polymerisatpulver bildet das Verfahren der Sprühtrocknung, bei dem die wäßrige Polymerisatdispersion in einem Warmluftstrom versprüht und entwässert wird. Vorzugsweise werden die Trockenluft und die versprühte wäßrige Polymerisatdispersion im Gleichstrom durch den Trockner geführt (vgl. z.B. EP-A 262 326 oder EP-A 407 889).

Erfindungsgemäß von Vorteil ist, daß unter Mitverwendung der an sich bekannten Sprühhilfsmittel und Antibackmittel auch wäßrige Polymerisatdispersionen, die die erfindungsgemäße Verbindung I enthalten, in befriedigender Weise zu, die erfindungsgemäße Verbindung I bereits eingearbeitet enthaltenden, in wäßrigem Medium redispergierbaren Polymerisatpulvern sprühgetrocknet werden können. Als geeignete Sprühhilfsmittel und Antibackmittel kommen beispielsweise diejenigen in Betracht, die in der EP-A 78 449, der EP-A 407 889, der EP-A 294 663 sowie in der DE-A 26 29 924 und der DE-AS 26 14 261 beschrieben sind. Beispielhaft genannt seien Naphthalinsulfonsäure/Formaldehyd sowie Phenolsulfonsäure/Formaldehyd-Kondensate, aber auch die hochmolekularen Verbindungen der DE-A 43 20 220 (O.Z. 0050/44088) sowie hochdisperse Kieselsäuren. Besonders zweckmäßig erfolgt die Sprühtrocknung der die erfindungsgemäße Verbindung I und gegebenenfalls die Sprühhilfsmittel enthaltenden wäßrigen Polymerisatdispersionen durch ihr Versprühen in einem Warmluftstrom mittels einer Ein- oder Mehrstoffdüse oder einer rotierenden Scheibe. Die Eingangstemperatur des Warmluftstroms liegt dabei üblicherweise im Bereich von 100 bis 200°C, vorzugsweise 120 bis 160°C, die Ausgangstemperatur beträgt normalerweise 40 bis 100°C. Die Abscheidung der Polymerisatpulver kann in an sich üblicher Weise, insbesondere unter Verwendung von Zyklonen oder Filterabscheidern erfolgen. Selbstverständlich können zur Polymerisatpulvergewinnung auch andere Verfahren wie z.B. die Gefriertrocknung angewendet werden.

Hinsichtlich der zur Herstellung der das modifizierende Polymerisat umfassenden wäßrigen Polymerisatdispersion mitzuverwendenden radikalischen Polymerisationsinitiatoren, Dispergiermittel und gegebenenfalls das Molekulargewicht regelnden Substanzen bestehen erfindungsgemäß im wesentlichen keine Einschränkungen.

In besonders vorteilhafter Weise tritt die erfindungsgemäße Wirkung bei Verwendung von mineralischen Bindemitteln aus 70 bis 100 Gew.-% Zement und 0 bis 30 Gew.-% Gips ein. Als ganz besonders vorteilhaft erweist sich die erfindungsgemäße Anwendung in mineralischen Baustoffen, denen als mineralischer Binder ausschließlich Zement zugrunde liegt.

Die erfindungsgemäße Wirkung ist von der Zementart im wesentlichen unabhängig. Je nach Vorhaben können also Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist.

In tpyischer Weise enthalten die Trockenzusammensetzunggen mineralischer Baustoffe 0,1 bis 20 Gew.-% modifizierendes Polymerisat. Bemerkenswerterweise verleihen die erfindungsgemäß zuzusetzenden Verbindungen I den erfindungsgemäßen mineralischen Baustoffen das erhöhte Haftungsvermögen im wesentlichen ohne die übrigen

Eigenschaften des mineralischen Baustoffs zu mindern.

Dies wird darauf zurückgeführt, daß das erhöhte Haftungsvermögen der erfindungsgemäßen mineralischen Baustoffe auf Schaumstoffmaterialien auf der Basis von Polystyrol vermutlich da herrührt, daß die erfindungsgemäßen Verbindungen I geschäumtes Polystyrol in einem gewißen Ausmaß anzulösen vermögen, ohne das Schaumstoffmaterial signifikant zu schädigen. Dieses gelöste Polystyrol bewirkt vermutlich in Wechselwirkung mit den zur Baustoffmodifizierung verwendeten Polymerisaten das erhöhte Haftvermögen. Dies erklärt auch die bleibende erhöhte Haftung bei Wassereinwirkung. Selbstverständlich können die erfindungsgemäßen Baustoffe auch auf andere Materialien wie Holz, Kunststoff, Mineralwolle oder sonstige mineralische Materialien wie Mauerwerk und Beton aufgebracht werden.

Da sie aufgrund ihrer mineralischen Beschaffenheit selbstredend auf anderen mineralischen Materialien haften, eignen sie sich in ganz besonders vorteilhafter Weise, um Schaumstoffmaterialien auf der Basis von Polystyrol auf mineralischen Materialien anzubringen.

Diesbezüglich eignen sich insbesondere mineralische Baustoffe, deren Trockenzusammensetzung umfaßt:

- 20 bis 60, vorzugsweise 20 bis 50 Gew.-% mineralisches Bindemittel (vorzugsweise ausschließlich Zement),
- 0,1 bis 10, vorzugsweise 0,1 bis 5 Gew.-% modifizierendes Polymerisat,
- bezogen auf das modifizierende Polymerisat 0,1 bis 20, vorzugsweise 0,1 bis 10 Gew.-% einer Verbindung I,
- bezogen auf das mineralische Bindemittel 0 bis 25 Gew.-% an sich übliche Hilfsmittel (z.B. Entschäumer oder Verdicker) und
- als Restmenge Zuschläge wie z.B. Sand, Füllstoffe (z.B. $CaCO_3$) und/oder Pigmente (z.B. $TiO_2$).

Abschließend sei festgehalten, daß die Einarbeitung der Verbindungen I in modifizierendes Polymerisat enthaltende, noch nicht angemachte, mineralische Baustofftrockenzubereitungen auch dadurch erfolgen kann, daß man die bei Normalbedingungen üblicherweise flüssigen Verbindungen I auf einen Füllstoff oder Sand als Träger aufzieht (ab- und/oder adsorbiert) und das dabei resultierende Trockenprodukt einarbeitet. In solcher Weise können sie auch in Bauklebstoff- oder Kunststoffputztrockenzubereitungen eingebracht werden. Als mögliche Träger für die erfindungsgemäßen Verbindungen I kommen dabei insbesondere feinteilige Kreiden, aber auch feinteiliges Siliciumdioxid in Betracht.

Beispiele

Beispiel 1

Herstellung von eine Verbindung I enthaltenden Dispersionen von zur Modifizierung mineralischer Baustoffe geeigneten Polymerisaten und aus diesen Dispersionen erhältiche, in wäßrigem Medium redispergierbare Polymerisatpulver.

D1: Eine Lösung von 0,63 g Polyacrylamid (Schutzkolloid), 0,37 g Ameisensäure und 1,57 g Natriumhydrogencarbonat (pH-Stellmittel) in 131,5 g Wasser wurde mit 1,04 g ethoxyliertem p-Isooctylphenol (EO-Grad 25) und 0,16 g des Na-Salzes eines ethoxylierten und danach sulfatierten p-Isooctylphenols (EO-Grad 25) als Emulgatoren versetzt und auf 90°C erhitzt. Anschließend führte man einem diese Mischung enthaltenden Polymerisationsgefäß unter Aufrechterhaltung der 90°C innerhalb von 2 h eine Emulsion von 271,5 g n-Butylacrylat, 234,9 g Styrol, 10,4 g Acrylamid, 5,2 g Methacrylamid, 21,6 g eines propoxylierten m-/p-Kresol-Gemisches (PO-Grad 6) als Verbindung I, 1,57 g eines ethoxylierten p-Isooctylphenols (EO-Grad 25) und 3,76 g des Na-Salzes eines ethoxylierten und danach sulfatierten p-Isooctylphenols (EO-Grad 25) in 144,6 g Wasser und (zeitgleich mit vorbeschriebenem Zulauf beginnend) innerhalb von 2,5 h eine Lösung von 3,03 g Natriumperoxodisulfat in 120 g Wasser kontinuierlich zu.

Danach wurde noch 2 h bei 90°C gerührt und schließlich auf 60°C abgekühlt. Nach Zugabe einer Lösung von 1,04 g tert.-Butylhydroperoxid in 9,4 g Wasser wurde bei dieser Temperatur innerhalb von 1 h eine Lösung von 1,04 g Natrium-Formaldehydsulfoxylat in 4,2 g Wasser kontinuierlich zugeführt und danach noch 0,5 h bei 60°C nachgerührt. Nach dem Abkühlen auf 25°C neutralisierte man mit einer Aufschlämmung von 0,5 g Calciumhydroxid in 1,9 g Wasser. Nach Filtration wurde eine wäßrige Polymerisatdispersion mit einem Feststoffgehalt von 55,2 Gew.-%, einem Lichtdurchlässigkeitswert, bezogen auf einen Feststoffgehalt von 0,01 Gew.-% (Schichtdicke 2,5 cm, Temperatur 20°C) von 10 % (bezogen auf reines Wasser) und einem pH-Wert von 8,5 erhalten.

D2: Wie D1, die 21,6 g an Verbindung I wurden jedoch erst im Anschluß an den Neutralisationsschritt mit Calciumhydroxid zugesetzt. Nach Filtration wurde eine wäßrige Polymerisatdispersion mit einem Feststoffgehalt von 54,9 Gew.-%, einem Lichtdurchlässigkeitswert, bezogen auf einen Feststoffgehalt von 0,01 Gew.-% (Schichtdicke 2,5 cm, Temperatur 20°C), von 10 % (bezogen auf reines Wasser) und einem pH-Wert von 8,5 erhalten.

VD1: VD1 ist eine Vergleichsdispersion. Sie wurde wie D1 hergestellt, jedoch ohne Zuatz einer erfindungsgemäßen Verbindung I. Nach Filtration wurde eine wäßrige Polymerisatdispersion mit einem Feststoffgehalt von 55,3 Gew.-%, einem Lichtdurchlässigkeitswert, bezogen auf einen Feststoffgehalt von 0,01 Gew.-% (Schichtdicke 2,5 cm, Temperatur 20°C), von 8 % (bezogen auf reines Wasser) und einem pH-Wert von 8,5 erhalten.

D3: Wie D1, jedoch erfolgte die Zugabe der 21,6 g an Verbindung I nicht im Emulsionszulauf, sondern bereits in die Vorlage. Nach Filtration wurde eine wäßrige Polymerisatdispersion mit einem Feststoffgehalt von 55,1 Gew.-%, einem Lichtdurchlässigkeitswert, bezogen auf einen Feststoffgehalt von 0,01 Gew.-% (Schichtdicke 2,5 cm, Temperatur 20°C), von 13 % (bezogen auf reines Wasser) und einem pH-Wert von 8,5 erhalten.

P1, P2, VP1, P3:

Die vorstehend beschriebenen wäßrigen Polymeriatdispersionen wurden mit 10 Gew.-% (fest auf fest) des Naphtalinsulfonsäure/Formaldehyd-Kondensats gemäß Bsp. 4 der EP-A 78 449 (aber nicht als Natriumsalz sondern als Calciumsalz) vermischt und durch Zugabe von Wasser auf einen Gesamtfeststoffgehalt von 35 Gew.-% verdünnt. Anschließend wurde in einem Labortrockner Typ Minor der Fa. Niro mit einer Leistung von 2 kg/h unter den in der nachfolgenden Tabelle 1 genannten Bedingungen zu in wäßrigem Dispergiermedium in voll befriedigender Weise redispergierbaren Polymeriatpulvern getrocknet. Zerstäubungsorgan war eine Zweistoffdüse mit einer Bohrung von 0,8 mm.

Tabelle 1

| Dispersion | Pulver | Eingangstemp. d. Trokkenluft (°C) | Ausgangstemp. d. Trokkenluft (°C) | Wandbelag | Pulverausbeute |
|---|---|---|---|---|---|
| D1 | P1 | 130 | 61 | wenig | 90 |
| D2 | P2 | 130 | 61 | wenig | 86 |
| VD1 | VP1 | 130 | 61 | wenig | 90 |
| D3 | P3 | 130 | 60 | wenig | 91 |

Beispiel 2

Verwendung der Polymerisat-Pulver P1, P2, VP1 und P3 in Armierungsmörtel für Styropor-Wärmedämm-Verbundsysteme

Gemäß nachfolgender Rezeptur wurde eine Trockenmischung hergestellt:

- 370 g Omyacarb® 130 Gu (weißes Calciumcarbonat der Fa. Omya GmbH, Köln),
- 140 g Quarzsand,
- 430 g Zement PZ 35 F,
- 18 g feinteiliges Siliciumdioxid (Microsilica der Fa. Elkem GmbH, Allensbach),
- 30 g Polymerisatpulver,
- 10 g Lumiten® E-P 3108 (Entschäumer der BASF AG),
- 2 g Walocel® MT 20 000 PV (Methylhydroxyethylcellulose, verzögert löslich in pH-neutralem kaltem Wasser, Verdicker, der Fa. Wolff Walsrode AG)

Die Trockenmischung wurde mit Wasser im Gewichtsverhältnis 100:20 (Wasser) mittels eines Rührers (Mischer gemäß DIN 1164) 2 min angerührt und anschließend auf handelsübliche, eine Dicke von 5 cm aufweisende Styroporplatten des Typs PS 15 SE (Bezeichnung gemäß Güteschutzgemeinschaft Hartschaum e.V., Frankfurt) aufgetragen (Naßschichtdicke von 3 mm). Die so beschichteten Styroporplatten wurden 14 Tage bei 25°C gelagert (trocken). Nach Abschluß der Lagerung wurden in die beschichteten Styroporplatten Kreise eines Durchmessers von 5 cm gebohrt (Kernbohrung), wobei die Bohrtiefe 10 mm in das Styropor hinein reichte. Ein Teil der gebohrten Styroporplatten wurde dann noch 1 Tag in Wasser bei 25°C gelagert. Anschließend wurde im Abreißversuch die Haftung der Bohrkerne aus

Armierungsmörtel auf der Styroporplatte geprüft. Die Ergebnisse zeigen die Tabellen 2 und 3.

Tabelle 2

| Ausschließlich Trockenlagerung | | |
|---|---|---|
| Polymerisatpulver | Bruchbild | Haftzugfestigkeit [$N/mm^2$] |
| P1 | 100 %iger Kohäsionsbruch im Styropor | 0,32* |
| P2 | 100 %iger Kohäsionsbruch im Styropor | 0,33* |
| VP1 | 100 %iger Adhäsionsbruch zwischen Mörtel und Styropor | 0,20 |
| P3 | 100 %iger Kohäsionsbruch im Styropor | 0,32* |
| Die %-Angaben beziehen sich auf die Bruchfläche. | | |

* Entspricht der Eigenfestigkeit des Styropors.

Tabelle 3

| Trockenlagerung und Naßlagerung | | |
|---|---|---|
| Polymerisatpulver | Bruchbild | Haftzugfestigkeit [$N/mm^2$] |
| P1 | 80 %iger Kohäsionsbruch im Styropor | 0,30 |
| P2 | 90 %iger Kohäsionsbruch im Styropor | 0,35 |
| VP1 | 100 %iger Adhäsionsbruch zwischen Mörtel und Styropor | 0,19 |
| P3 | 70 %iger Kohäsionsbruch im Styropor | 0,30 |
| Die %-Angaben beziehen sich auf die Bruchfläche. | | |

**Patentansprüche**

1. Mit Polymerisaten modifizierte mineralische Baustoffe, die wenigstens eine Verbindung der allgemeinen Formel I

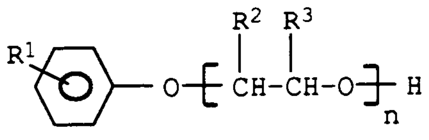

(I),

in der die Variablen nachfolgende Bedeutung aufweisen:

$R^1$: $C_1$- bis $C_5$-Alkyl,
$R^2$, $R^3$: Wasserstoff oder Methyl, mit der Maßgabe, daß $R^2$ von $R^3$ verschieden sein muß und
n: eine Zahl im Bereich von 2 bis 9,

zugesetzt enthalten.

2. Mineralische Baustoffe nach Anspruch 1, die wenigstens eine Verbindung der allgemeinen Formel I zugesetzt enthalten, in der $R^1$ Methyl ist.

3. Mineralische Baustoffe nach Anspruch 1 oder 2, die wenigstens eine Verbindung der allgemeinen Formel I zugesetzt enthalten, in der n eine Zahl von 4 bis 7 ist.

4. Mineralische Baustoffe nach Anspruch 1 oder 2, die wenigstens eine Verbindung der allgemeinen Formel I zugesetzt enthalten, in der n 6 ist.

5. Mineralische Baustoffe nach Anspruch 1 bis 4, die als mineralische Bindemittel Zement enthalten.

6. Mineralische Baustoffe nach Anspruch 1 bis 4, die als einziges mineralisches Bindemittel Zement enthalten.

7. Mineralische Baustoffe nach Anspruch 1 bis 6, die als modifizierendes Polymerisat ein solches enthalten, dessen Glasübergangstemperautr -60 bis +180°C beträgt.

8. Mineralische Baustoffe nach Anspruch 1 bis 6, die als modifizierendes Polymerisat ein solches enthalten, dessen Glasübergangstemperatur -15 bis +60°C beträgt.

9. Mineralische Baustoffe nach Anspruch 1 bis 6, die als modifizierendes Polymerisat ein solches enthalten, dessen Glasübergangstemperatur 0 bis 40°C beträgt.

10. Mineralische Baustoffe nach Anspruch 1 bis 9, die als modifizierendes Polymerisat ein solches enthalten, das in polymerisierter Form

| | |
|---|---|
| zu 90 bis 100 Gew.-% | aus wenigstens einem Monomeren aus der Gruppe umfassend Styrol, α-Methylstyrol, Vinyltoluole sowie Ester aus 3 bis 6 Kohlenstoffatome aufweisenden α,β-monoethylenisch ungesättigten Carbonsäuren und 1 bis 12 Kohlenstoffatome aufweisenden Alkanolen und |
| zu 0 bis 10 Gew.-% | aus sonstigen wenigstens eine ethylenisch ungesättigte Gruppe aufweisende Monomeren |

aufgebaut ist.

11. Mineralische Baustoffe nach Anspruch 1 bis 9, die als modifizierendes Polymerisat ein solches enthalten, das in polymerisierter Form

| | |
|---|---|
| zu 30 bis 70 Gew.-% | aus wenigstens einem Ester aus 3 bis 6 C-Atome aufweisenden α,β-monoethylenisch ungesättigten Carbonsäuren und 1 bis 12 Kohlenstoffatome aufweisenden Alkanolen, |
| zu 30 bis 70 Gew.-% | aus wenigstens einem Monomeren aus der Gruppe umfassend Styrol, α-Methylstyrol und Vinyltoluole und |
| zu 0 bis 5 Gew.-% | aus einem oder mehreren Monomeren aus der Gruppe umfassend 3 bis 6 C-Atome aufweisende α,β-monoethylenisch ungesättigte Carbonsäuren und deren Amide |

aufgebaut ist.

12. Mineralische Bindebaustoffe nach Anspruch 1 bis 9, die als modifizierendes Polymerisat ein solches enthalten, das in polymerisierter Form

| | |
|---|---|
| zu 90 bis 100 Gew.-% | aus n-Butylacrylat und/oder Styrol und |
| zu 0 bis 10 Gew.-% | aus sonstigen wenigstens eine ethylenisch ungesättigten Gruppe aufweisenden Monomeren |

aufgebaut ist.

13. Mineralische Bindebaustoffe nach Anspruch 1 bis 9, die als modifiziertendes Polymerisat ein solches enthalten, das in polymerisierter Form

| | |
|---|---|
| zu 30 bis 70 Gew.-% | aus n-Butylacrylat, |
| zu 30 bis 70 Gew.-% | aus Styrol und |
| zu 0 bis 5 Gew.-% | aus einem oder mehreren Monomeren aus der Gruppe umfassend 3 bis 6 C-Atome aufweisende α,β-monoethylenisch ungesättigte Carbonsäuren und deren Amide |

aufgebaut ist.

**14.** Mineralische Baustoffe nach Anspruch 1 bis 13, deren Trockenzusammensetzung 0,1 bis 20 Gew.-% an modifizierendem Polymerisat enthält.

**15.** Mineralische Baustoffe nach Anspruch 1 bis 13, deren Trockenzusammensetzung umfaßt

- 20 bis 60 Gew.-% mineralisches Bindemittel,
- 0,1 bis 10 Gew.-% modifizierendes Polymerisat,
- bezogen auf das modifizierende Polymerisat 0,1 bis 20 Gew.-% wenigstens einer Verbindung I,
- bezogen auf das mineralische Bindemittel 0 bis 25 Gew.-% an sich üblicher Hilfsmittel und
- als Restmenge Zuschläge.

**16.** Verwendung mineralischer Baustoffe nach Anspruch 1 bis 15, um Schaumstoffmaterialien auf der Basis von Polystyrol auf mineralischen Materialien anzubringen.

**17.** Polymerisatpulver, erhältlich durch Trocknung einer wäßrigen Polymerisatdispersion, das wenigstens eine Verbindung der allgemeinen Formel I

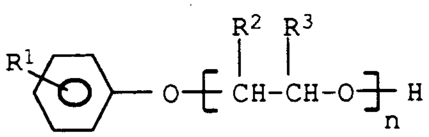

(I),

in der die Variablen nachfolgende Bedeutung aufweisen:

| | |
|---|---|
| $R^1$: | $C_1$- bis $C_5$-Alkyl, |
| $R^2$, $R^3$: | Wasserstoff oder Methyl, mit der Maßgabe, daß $R^2$ von $R^3$ verschieden sein muß und |
| n: | eine Zahl im Bereich von 2 bis 9, |

zugesetzt enthält.

**18.** Polymerisatpulver nach Anspruch 17, dessen Verbindung I als $R^1$ Methyl aufweist.

**19.** Polymerisatpulver nach Anspruch 17 oder 18, dessen Verbindung I als n eine Zahl von 4 bis 7 aufweist.

**20.** Polymerisatpulver nach Anspruch 17 oder 18, dessen Verbindung I als n die Zahl 6 aufweist.

**21.** Polymerisatpulver nach Anspruch 17 bis 20, dessen Dispersionspolymerisat eine Glasübergangstemperatur von -60 bis +180°C aufweist.

**22.** Polymerisatpulver nach Anspruch 17 bis 20, dessen Dispersionspolymerisat eine Glasübergangstemperatur von -15 bis +60°C aufweist.

**23.** Polymerisatpulver nach Anspruch 17 bis 20, dessen Dispersionspolymerisat eine Glasübergangstemperatur von 0 bis 40°C aufweist.

**24.** Polymerisatpulver nach Anspruch 17 bis 23, dessen Dispersionspolymerisat in polymerisierter Form

| | |
|---|---|
| zu 90 bis 100 Gew.-% | aus wenigstens einem Monomeren aus der Gruppe umfassend Styrol, α-Methylstyrol, Vinyltoluole sowie Ester aus 3 bis 6 Kohlenstoffatome aufweisenden α,β-monoethylenisch ungesättigten Carbonsäuren und 1 bis 12 Kohlenstoffatome aufweisenden Alkanolen und |
| zu 0 bis 10 Gew.-% | aus sonstigen wenigstens eine ethylenisch ungesättigte Gruppe aufweisende Monomeren |

aufgebaut ist.

**25.** Polymerisatpulver nach Anspruch 17 bis 23, dessen Dispersionspolymerisat in polymerisierter Form

| | |
|---|---|
| zu 30 bis 70 Gew.-% | aus wenigstens einem Ester aus 3 bis 6 C-Atome aufweisenden α,β-monoethylenisch ungesättigten Carbonsäuren und 1 bis 12 Kohlenstoffatome aufweisenden Alkanolen, |
| zu 30 bis 70 Gew.-% | aus wenigstens einem Monomeren aus der Gruppe umfassend Styrol, α-Methylstyrol und Vinyltoluole und |
| zu 0 bis 5 Gew.-% | aus einem oder mehreren Monomeren aus der Gruppe umfassend 3 bis 6 C-Atome aufweisende α,β-monoethylenisch ungesättigte Carbonsäuren und deren Amide |

aufgebaut ist.

**26.** Polymerisatpulver nach Anpruch 17 bis 23, dessen Dispersionspolymerisat in polymerisierter Form

| | |
|---|---|
| zu 90 bis 100 Gew.-% | aus n-Butylacrylat und/oder Styrol und |
| zu 0 bis 10 Gew.-% | aus sonstigen wenigstens eine ethylenisch ungesättigten Gruppe aufweisenden Monomeren |

aufgebaut ist.

**27.** Polymerisatpulver nach Anspruch 17 bis 23, dessen Dispersionspolymerisat in polymerisierter Form

| | |
|---|---|
| zu 30 bis 70 Gew.-% | aus n-Butylacrylat, |
| zu 30 bis 70 Gew.-% | aus Styrol und |
| zu 0 bis 5 Gew.-% | aus einem oder mehreren Monomeren aus der Gruppe umfassend 3 bis 6 C-Atome aufweisende α,β-monoethylenisch ungesättigte Carbonsäuren und deren Amide |

aufgebaut ist.

**28.** Polymerisatpulver nach Anspruch 17 bis 27, das aus einer wäßrigen Polymerisatdispersion erhalten wurde, deren dispergierte Polymerisatpartikel einen gewichtsmittleren Durchmesser $\overline{d}_w$ > 100 nm aufweisen.

**29.** Polymerisatpulver nach Anspruch 17 bis 27, das aus einer wäßrigen Polymerisatdispersion erhalten wurde, deren dispergierte Polymerisatpartikel einen gewichtsmittleren Durchmesser $\overline{d}_w$ > 300 nm aufweisen.

**30.** Polymerisatpulver nach Anspruch 17 bis 29, das aus einer wäßrigen Polymerisatdispersion erhalten wurde, deren dispergierte Polymerisatpartikel eine Verteilungsbreite ihrer Durchmesser aufweisen, die durch einen Quotienten $d_{90}$-$d_{10}$/$d_{50}$ von 0,5 bis 1,5 charakterisiert ist.

**31.** Verfahren zur Herstellung von Polymerisatpulvern nach Anspruch 17 bis 30, dadurch gekennzeichnet, daß man zu einer wäßrigen Dispersion des Polymerisats wenigstens eine Verbindung der allgemeinen Formel I gibt und anschließend das Gemisch sprühtrocknet.

**32.** Mineralische Baustofftrockenzubereitungen, enthaltend wenigstens ein Polymerisatpulver nach Anspruch 17 bis 29.

**33.** Mineralische Bindemittel, enthaltend wenigstens ein Polymerisatpulver nach Anspruch 17 bis 29.

**34.** Verwendung von Polymerisatpulvern nach Anspruch 17 bis 30 zur Zubereitung mineralischer Baustoffe.

**35.** Verwendung von Verbindungen der allgemeinen Formel I als Additiv in mit Polymerisaten modifizierten mineralischen Baustoffen.

**Claims**

**1.** A mineral building material modified with a polymer and containing at least one added compound of the formula I

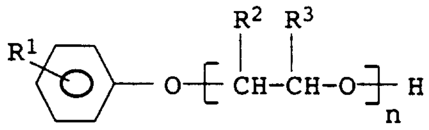

(I),

where

| | |
|---|---|
| $R^1$ | is $C_1$-$C_5$-alkyl, |
| $R^2$ and $R^3$ | are each hydrogen or methyl, with the proviso that $R^2$ must differ from $R^3$, and |
| n | is from 2 to 9. |

**2.** A mineral building material as claimed in claim 1, which contains at least one added compound of the formula I where $R^1$ is methyl.

**3.** A mineral building material as claimed in claim 1 or 2, which contains at least one added compound of the formula I where n is from 4 to 7.

**4.** A mineral building material as claimed in claim 1 or 2, which contains at least one added compound of the formula I where n is 6.

**5.** A mineral building material as claimed in any of claims 1 to 4, which contains cement as the mineral binder.

**6.** A mineral building material as claimed in any of claims 1 to 4, which contains cement as the sole mineral binder.

**7.** A mineral building material as claimed in any of claims 1 to 6, which contains, as the modifying polymer, one whose glass transition temperature is from -60 to +180°C.

**8.** A mineral building material as claimed in any of claims 1 to 6, which contains, as the modifying polymer, one whose glass transition temperature is from -15 to +60°C.

**9.** A mineral building material as claimed in any of claims 1 to 6, which contains, as the modifying polymer, one whose glass transition temperature is from 0 to 40°C.

**10.** A mineral building material as claimed in any of claims 1 to 9, which contains, as the modifying polymer, one which, in polymerized form, is composed of

| | |
|---|---|
| from 90 to 100% by weight | of at least one monomer selected from the group consisting of styrene, α-methylstyrene, vinyltoluenes and esters of α,β-monoethylenically unsaturated carboxylic acids of 3 to 6 carbon atoms and alkanols of 1 to 12 carbon atoms and |
| from 0 to 10% by weight | of other monomers having at least one ethylenically unsaturated group. |

**11.** A mineral building material as claimed in any of claims 1 to 9, which contains, as the modifying polymer, one which, in polymerized form, is composed of

| | |
|---|---|
| from 30 to 70% by weight | of at least one ester of α,β-monoethylenically unsaturated carboxylic acids of 3 to 6 carbon atoms and alkanols of 1 to 12 carbon atoms, |
| from 30 to 70% by weight | of at least one monomer selected from the group consisting of styrene, α-methylstyrene and vinyltoluenes and |
| from 0 to 5% by weight | of one or more monomers selected from the group consisting of α,β-monoethylenically unsaturated carboxylic acids of 3 to 6 carbon atoms and amides thereof. |

**12.** A mineral binding building material as claimed in any of claims 1 to 9, which contains, as the modifying polymer,

one which, in polymerized form, is composed of

| | |
|---|---|
| from 90 to 100% by weight | of n-butyl acrylate and/or styrene and |
| from 0 to 10% by weight | of other monomers having at least one ethylenically unsaturated group. |

**13.** A mineral binding building material as claimed in any of claims 1 to 9, which contains, as the modifying polymer, one which, in polymerized form, is composed of

| | |
|---|---|
| from 30 to 70% by weight | of n-butyl acrylate, |
| from 30 to 70% by weight | of styrene and |
| from 0 to 5% by weight | of one or more monomers selected from the group consisting of α,β-monoethylenically unsaturated carboxylic acids of 3 to 6 carbon atoms and amides thereof. |

**14.** A mineral building material as claimed in any of claims 1 to 13, whose dry composition contains from 0.1 to 20% by weight of modifying polymer.

**15.** A mineral building material as claimed in any of claims 1 to 13, whose dry composition comprises

- from 20 to 60% by weight of mineral binder,
- from 0.1 to 10% by weight of modifying polymer,
- from 0.1 to 20% by weight, based on the modifying polymer, of at least one compound I,
- from 0 to 25% by weight, based on the mineral binder, of conventional assistants and,
- as the residual amount, additives.

**16.** Use of a mineral building material as claimed in any of claims 1 to 15 for applying foam materials based on polystyrene to mineral materials.

**17.** A polymer powder obtainable by drying an aqueous polymer emulsion which contains at least one added compound of the formula I

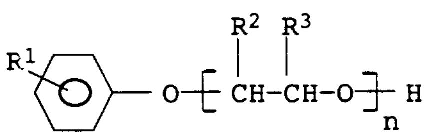 (I),

where

| | |
|---|---|
| $R^1$ | is $C_1$-$C_5$-alkyl, |
| $R^2$ and $R^3$ | are each hydrogen or methyl, with the proviso that $R^2$ must differ from $R^3$, and |
| n | is from 2 to 9. |

**18.** A polymer powder as claimed in claim 17, in whose compound I $R^1$ is methyl.

**19.** A polymer powder as claimed in claim 17 or 18, in whose compound I n is from 4 to 7.

**20.** A polymer powder as claimed in claim 17 or 18, in whose compound I n is 6.

**21.** A polymer powder as claimed in any of claims 17 to 20, whose emulsion polymer has a glass transition temperature of from -60 to +180°C.

**22.** A polymer powder as claimed in any of claims 17 to 20, whose emulsion polymer has a glass transition temperature of from -15 to +60°C.

**23.** A polymer powder as claimed in any of claims 17 to 20, whose emulsion polymer has a glass transition temperature of from 0 to 40°C.

**24.** A polymer powder as claimed in any of claims 17 to 23, whose emulsion polymer, in polymerized form, is composed of

| | |
|---|---|
| from 90 to 100% by weight | of at least one monomer selected from the group consisting of styrene, α-methylstyrene, vinyltoluenes and esters of α,β-monoethylenically unsaturated carboxylic acids of 3 to 6 carbon atoms and alkanols of 1 to 12 carbon atoms and |
| from 0 to 10% by weight | of other monomers having at least one ethylenically unsaturated group. |

**25.** A polymer powder as claimed in any of claims 17 to 23, whose emulsion polymer, in polymerized form, is composed of

| | |
|---|---|
| from 30 to 70% by weight | of at least one ester of α,β-monoethylenically unsaturated carboxylic acids of 3 to 6 carbon atoms and alkanols of 1 to 12 carbon atoms, |
| from 30 to 70% by weight | of at least one monomer selected from the group consisting of styrene, α-methylstyrene and vinyltoluenes and |
| from 0 to 5% by weight | of one or more monomers selected from the group consisting of α,β-monoethylenically unsaturated carboxylic acids of 3 to 6 carbon atoms and amides thereof. |

**26.** A polymer powder as claimed in any of claims 17 to 23, whose emulsion polymer, in polymerized form, is composed of

| | |
|---|---|
| from 90 to 100% by weight | of n-butyl acrylate and/or styrene and |
| from 0 to 10% by weight | of other monomers having at least one ethylenically unsaturated group. |

**27.** A polymer powder as claimed in any of claims 17 to 23, whose emulsion polymer, in polymerized form, is composed of

| | |
|---|---|
| from 30 to 70% by weight | of n-butyl acrylate, |
| from 30 to 70% by weight | of styrene and |
| from 0 to 5% by weight | of one or more monomers selected from the group consisting of α,β-monoethylenically unsaturated carboxylic acids of 3 to 6 carbon atoms and amides thereof. |

**28.** A polymer powder as claimed in any of claims 17 to 27, which was obtained from an aqueous polymer emulsion whose dispersed polymer particles have a weight average diameter $\bar{d}_w$ > 100 nm.

**29.** A polymer powder as claimed in any of claims 17 to 27, which was obtained from an aqueous polymer emulsion whose dispersed polymer particles have a weight average diameter $\bar{d}_w$ > 300 nm.

**30.** A polymer powder as claimed in any of claims 17 to 29, which was obtained from an aqueous polymer emulsion whose dispersed polymer particles have a distribution width of their diameters which is characterized by a quotient $d_{90}$-$d_{10}$/$d_{50}$ of from 0.5 to 1.5.

**31.** A process for the preparation of a polymer powder as claimed in any of claims 17 to 30, wherein at least one compound of the formula I is added to an aqueous emulsion of the polymer and the mixture is then spray-dried.

**32.** A dry mineral building material formulation containing at least one polymer powder as claimed in any of claims 17

to 29.

**33.** A mineral binder containing at least one polymer powder as claimed in any of claims 17 to 29.

**34.** Use of a polymer powder as claimed in any of claims 17 to 30 for the formulation of mineral building materials.

**35.** Use of a compound of the formula I as an additive in mineral building materials modified with polymers.

**Revendications**

**1.** Matériaux de construction minéraux modifiés par des polymères, qui contiennent par ajout au moins un composé de formule générale I

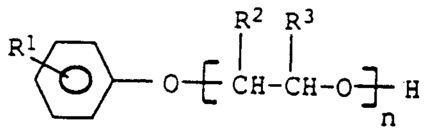

(I),

dans laquelle les variables ont la signification suivante :

| | |
|---|---|
| $R^1$ | groupement alkyle en $C_1$-$C_5$, |
| $R^2$, $R^3$ | atome d'hydrogène ou groupement méthyle, $R^2$ devant être différent de $R^3$ et |
| n | un nombre dans la gamme de 2 à 9. |

**2.** Matériaux de construction minéraux selon la revendication 1, qui contiennent par ajout au moins un composé de formule générale I, dans laquelle $R^1$ est un groupement méthyle.

**3.** Matériaux de construction minéraux selon l'une des revendications 1 et 2, qui contiennent par ajout au moins un composé de formule générale I, dans laquelle n est un nombre de 4 à 7.

**4.** Matériaux de construction minéraux selon l'une des revendications 1 et 2, qui contiennent par ajout au moins un composé de formule générale I, dans laquelle n vaut 6.

**5.** Matériaux de construction minéraux selon l'une quelconque des revendications 1 à 4, qui contiennent du ciment en tant que liant minéral.

**6.** Matériaux de construction minéraux selon l'une quelconque des revendications 1 à 4, qui contiennent du ciment en tant que seul liant minéral.

**7.** Matériaux de construction minéraux selon l'une quelconque des revendications 1 à 6, qui contiennent un polymère modifiant dont la température de transition vitreuse est de -60 à +180°C.

**8.** Matériaux de construction minéraux selon l'une quelconque des revendications 1 à 6, qui contiennent un polymère modifiant dont la température de transition vitreuse est de -15 à +60°C.

**9.** Matériaux de construction minéraux selon l'une quelconque des revendications 1 à 6, qui contiennent un polymère modifiant dont la température de transition vitreuse est de 0 à 40°C.

**10.** Matériaux de construction minéraux selon l'une quelconque des revendications 1 à 9, qui contiennent un polymère modifiant qui, sous forme polymérisée, est construit

| | |
|---|---|
| pour 90 à 100 % en poids, | à partir d'un monomère venant du groupe qui comprend le styrène, le α-méthylstyrène, le vinyltoluène ainsi que les esters formés à partir d'acides carboxyliques à insaturation α,β-monoéthylénique à 3-6 atomes de carbone et d'alcanols à 1-12 atomes de carbone et |

pour 0 à 10 % en poids, à partir d'au moins un autre monomère contenant des groupements à insaturation éthylénique.

**11.** Matériaux de construction minéraux selon l'une quelconque des revendications 1 à 9, qui contiennent un polymère modifiant qui, sous forme polymérisée, est construit

pour 30 à 70 % en poids, à partir d'au moins un ester formé à partir d'acides carboxyliques à insaturation α,β-monoéthylénique à 3-6 atomes de carbone et d'alcanols à 1-12 atomes de carbone,
pour 30 à 70 % en poids, à partir d'au moins un monomère venant du groupe qui comprend le styrène, le α-méthylstyrène et le vinyltoluène, et
pour 0 à 5 % en poids, à partir d'un ou plusieurs monomères venant du groupe qui comprend les acides carboxyliques à insaturation α,β-monoéthylénique à 3-6 atomes de carbone et leurs amides.

**12.** Matériaux de construction minéraux selon l'une quelconque des revendications 1 à 9, qui contiennent un polymère modifiant qui, sous forme polymérisée, est construit

pour 90 à 100 % en poids, à partir d'acrylate de n-butyle et/ou de styrène et
pour 0 à 10 % en poids, à partir d'au moins un autre monomère contenant des groupements à insaturation éthylénique.

**13.** Matériaux de construction minéraux selon l'une quelconque des revendications 1 à 9, qui contiennent un polymère modifiant qui, sous forme polymérisée, est construit

pour 30 à 70 % en poids, à partir d'acrylate de n-butyle,
pour 30 à 70 % en poids, à partir de styrène et
pour 0 à 5 % en poids, à partir d'un ou plusieurs monomères venant du groupe qui comprend les acides carboxyliques à insaturation α,β-monoéthylénique à 3-6 atomes de carbone et leurs amides.

**14.** Matériaux de construction minéraux selon l'une quelconque des revendications 1 à 13, dont la composition sèche contient 0,1 à 20 % en poids d'un polymère modifiant.

**15.** Matériaux de construction minéraux selon l'une quelconque des revendications 1 à 13, dont la composition sèche comprend

- 20 à 60 % en poids d'un liant minéral,
- 0,1 à 10 % en poids d'un polymère modifiant,
- 0,1 à 20 % en poids, par rapport au polymère modifiant, d'au moins un composé I,
- 0 à 25 % en poids, par rapport au liant minéral, d'un adjuvant usuel et
- pour la quantité restante, des additifs.

**16.** Utilisation de matériaux de construction minéraux selon l'une quelconque des revendications 1 à 15, pour adapter des matériaux en mousse à base de polystyrène sur des matériaux minéraux.

**17.** Poudre de polymère, obtenue par séchage d'une dispersion aqueuse de polymère, qui contient par ajout au moins un composé de formule générale I

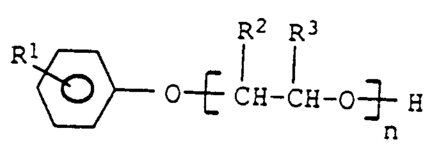

(I),

dans laquelle les variables ont la signification suivante :

$R^1$ groupement alkyle en $C_1$-$C_5$,
$R^2$, $R^3$ atome d'hydrogène ou groupement méthyle, $R^2$ devant être différent de $R^3$ et
n un nombre dans la gamme de 2 à 9.

**18.** Poudre de polymère selon la revendication 17, dont le composé I présente un groupement méthyle pour $R^1$.

**19.** Poudre de polymère selon l'une des revendications 17 et 18, dont le composé I est tel que n vaut 4 à 7.

**20.** Poudre de polymère selon l'une des revendications 17 et 18, dont le composé I est tel que n vaut 6.

**21.** Poudre de polymère selon l'une quelconque des revendications 17 à 20, où le polymère de la dispersion présente une température de transition vitreuse de -60 à +180°C.

**22.** Poudre de polymère selon l'une quelconque des revendications 17 à 20, où le polymère de la dispersion présente une température de transition vitreuse de -15 à +60°C.

**23.** Poudre de polymère selon l'une quelconque des revendications 17 à 20, où le polymère de la dispersion présente une température de transition vitreuse de 0 à 40°C.

**24.** Poudre de polymère selon l'une quelconque des revendications 17 à 23, où le polymère de la dispersion, sous forme polymérisée, est construit

pour 90 à 100 % en poids, à partir d'un monomère venant du groupe qui comprend le styrène, le α-méthylstyrène, le vinyltoluène ainsi que les esters formés à partir d'acides carboxyliques à insaturation α,β-monoéthylénique à 3-6 atomes de carbone et d'alcanols à 1-12 atomes de carbone et
pour 0 à 10 % en poids, à partir d'au moins un autre monomère contenant des groupements à insaturation éthylénique.

**25.** Poudre de polymère selon l'une quelconque des revendications 17 à 23, où le polymère de la dispersion, sous forme polymérisée est construit

pour 30 à 70 % en poids, à partir d'au moins un ester formé à partir d'acides carboxyliques à insaturation α,β-monoéthylénique à 3-6 atomes de carbone et d'alcanols à 1-12 atomes de carbone,
pour 30 à 70 % en poids, à partir d'au moins un monomère venant du groupe qui comprend le styrène, le α-méthylstyrène et le vinyltoluène, et
pour 0 à 5 % en poids, à partir d'un ou plusieurs monomères venant du groupe qui comprend les acides carboxyliques à insaturation α,β-monoéthylénique à 3-6 atomes de carbone et leurs amides.

**26.** Poudre de polymère selon l'une quelconque des revendications 17 à 23, où le polymère de la dispersion, sous forme polymérisée, est construit

pour 90 à 100 % en poids, à partir d'acrylate de n-butyle et/ou de styrène et
pour 0 à 10 % en poids, à partir d'au moins un autre monomère contenant des groupements à insaturation éthylénique.

**27.** Poudre de polymère selon l'une quelconque des revendications 17 à 23, où le polymère de la dispersion, sous forme polymérisée, est construit

pour 30 à 70 % en poids, à partir d'acrylate de n-butyle,
pour 30 à 70 % en poids, à partir de styrène et
pour 0 à 5 % en poids, à partir d'un ou plusieurs monomères venant du groupe qui comprend les acides carboxyliques à insaturation α,β-monoéthylénique à 3-6 atomes de carbone et leurs amides.

**28.** Poudre de polymère selon l'une quelconque des revendications 17 à 27, qui serait obtenue à partir d'une dispersion aqueuse de polymère, dont les particules dispersées de polymère présentent un diamètre moyen en poids $\overline{d}_w$

> 100 nm.

**29.** Poudre de polymère selon l'une quelconque des revendications 17 à 27, qui serait obtenue à partir d'une dispersion aqueuse de polymère, dont les particules dispersées de polymère présentent un diamètre moyen en poids $\overline{d}_w$ > 300 nm.

**30.** Poudre de polymère selon l'une quelconque des revendications 17 à 29, qui serait obtenue à partir d'une dispersion aqueuse de polymère, dont les particules dispersées de polymère présentent une largeur de la distribution de leur diamètre caractérisée par un quotient $d_{90}$ - $d_{10}/d_{50}$ de 0,5 à 1,5.

**31.** Procédé de fabrication de poudres de polymère selon l'une quelconque des revendications 17 à 30, caractérisé en ce que l'on ajoute à une dispersion aqueuse du polymère, au moins un composé de formule générale I puis l'on sèche le mélange par pulvérisation.

**32.** Préparations sèches de matériaux de construction minéraux, contenant au moins une poudre de polymère selon l'une quelconque des revendications 17 à 29.

**33.** Liants minéraux contenant au moins une poudre de polymère selon l'une quelconque des revendications 17 à 29.

**34.** Utilisation de poudres de polymère selon l'une quelconque des revendications 17 à 30 pour la préparation de matériaux de construction minéraux.

**35.** Utilisation de composés de formule générale I en tant qu'additifs pour matériaux de construction minéraux modifiés par des polymères.